# EUROPÄISCHE PATENTSCHRIFT

(11) **EP 1 053 447 B1**
(45) Veröffentlichungstag und Bekanntmachung des Hinweises auf die Patenterteilung: **18.09.2002**
(21) Anmeldenummer: 99907272.1
(22) Anmeldetag: 25.01.1999
(51) Int. Cl.: G01B 11/04, G01B 21/06, B65G 43/02, G01L 5/04

(54) **EINRICHTUNG ZUR KONTINUIERLICHEN ÜBERWACHUNG EINER VERBINDUNG EINES FÖRDERGURTES**
DEVICE FOR CONTINUOUSLY MONITORING THE JUNCTION OF A CONVEYOR BELT
DISPOSITIF DE SURVEILLANCE CONTINUE DE LA JONCTION D'UNE BANDE TRANSPORTEUSE

(30) Priorität: 13.02.1998 DE 19805754
(43) Veröffentlichungstag der Anmeldung: 22.11.2000
(73) Patentinhaber: PHOENIX AKTIENGESELLSCHAFT, 21079 Hamburg (DE)
(72) Erfinder: SCHNELL, Wolfgang, D-21079 Hamburg (DE)
(86) Internationale Anmeldenummer: DE9900169
(87) Internationale Veröffentlichungsnummer: WO99041567

(56) Entgegenhaltungen:
- DE-A- 3 131 963
- DE-C- 19 525 326
- US-A- 4 020 945
- US-A- 5 291 131
- PATENT ABSTRACTS OF JAPAN vol. 097, no. 011, 28. November 1997 & JP 09 175628 A (YOKOHAMA RUBBER CO LTD:THE), 8. Juli 1997

## Beschreibung

Die Erfindung betrifft eine Einrichtung zur kontinuierlichen Überwachung einer Verbindung eines Fördergurtes aus Gummi oder gummiähnlichem Kunststoff, der insbesondere mit eingebetteten Festigkeitsträgern versehen ist (Stahlseil-Fördergurt, Textil-Fördergurt).

In der Offenlegungsschrift DE-A-31 31 963 wird ein Förderanlagen- und Laufrollüberwachungssystem beschrieben, und zwar bei einer Meßwerterfassung von mechanischen Größen wie Drehzahl, Drehmoment, Lagerbelastung, Temperatur, Banddurchhang, Bandspannung, Bandbeschädigung und Bandschräglauf. Ferner wird in der Patentschrift DE-C-195 25 326 ein Verfahren und eine Anordnung zur Überwachung eines Fördergurtes vorgestellt, und zwar unter Verwendung von Transpondern. Schließlich beschreibt die US-A-4 020 945 eine Einrichtung zur kontinuierlichen Überwachung einer Verbindung eines Fördergurtes, bei der am Anfang und am Ende des Verbindungsbereiches magnetische Bereiche als Meßmarken in das Fördergurtmaterial eingelassen sind. Der Durchgang dieser Meßmarken wird von einem Meßmarkendetektionsystem erfaßt und daraus sowohl die Fördergurtgeschwindigkeit als auch die Länge des Verbindungsbereiches gemessen.

Die Verbindungen von Fördergurten werden allgemein als Bereiche einer Gurtanlage betrachtet, denen besondere Aufmerksamkeit hinsichtlich ihrer Funktionsfähigkeit und Dauerhaftigkeit gebührt. Dies liegt darin, daß in diesem Bereich die Zugkräfte vom Festigkeitsträger in den Gummiwerkstoff der Verbindung und wieder in den Festigkeitsträger der nachfolgenden Gurtlänge übergehen. Dabei wird die Gurtzugkraft sowohl den Gummi mit Schubspannungen beanspruchen als auch die Haftung zwischen Gummi und Festigkeitsträger. Es muß außerdem davon ausgegangen werden, daß die Spannungsverteilung innerhalb der Verbindung und in den Übergangsbereichen nicht homogen sein wird, so daß immer Bereiche vorhanden sein werden, von denen aus ein Versagen der Verbindung nach entsprechend langen Einsatzzeiten ausgehen kann.

Da das Versagen einer Fördergurtverbindung ein sehr großes Gefahrenpotential und beträchtliches ökonomisches Risiko darstellt, müssen solche Ereignisse vermieden werden. Von den Betreibern der Fördergurtanlagen werden deshalb vermehrt Überwachungseinrichtungen für Fördergurtverbindungen verlangt, die ein beginnendes Versagen rechtzeitig ankündigen und Instandsetzungsmaßnahmen einzuleiten gestatten, ehe es zum Bruch der Verbindung kommt.

Neben regelmäßigen Inspektionen, bei denen äußere Beschädigungen visuell erfaßt werden können, bietet sich eine kontinuierliche, automatische Überwachung der gesamten Verbindungslänge oder einzelner diskreter Zonen der Verbindung, die beispielsweise bei mehrstufigen Stahlseilgurtverbindungen die Auslenkzonen und sogenannten Rapporte sein können, an. Dabei wird von der Vorstellung ausgegangen, daß im Normalbetrieb (nicht bei extremer Überlastung!) eine Verbindung nicht schlagartig als Ganzes versagt, sondern daß ein Versagen von einzelnen Bereichen der Verbindung ausgeht. Dabei werden die verbleibenden, intakten Bereiche eine höhere Belastung erfahren, was zu einer höheren Dehnung und somit zu einer Längenzunahme der belasteten Verbindung führt.

Die an definierten Stellen der Bandanlage erfaßten Längen der Verbindung bzw. Referenzstrecken müssen mit Sollwerten und Grenzwerten verglichen werden, bei deren Überschreitung eine Warnmeldung oder gar ein Stillsetzen der Anlage erfolgt.

Störende Einflüsse wie beispielsweise unterschiedliche Beladungszustände, unterschiedliche Meßorte und Temperaturänderungen müssen natürlich durch Korrekturrechnung eliminiert werden. Die Längenerfassung muß automatisch, kontinuierlich mit hoher Präzision und Zuverlässigkeit erfolgen, was Extremanforderungen für die einzusetzenden Meßwertbildungs- und Erfassungssysteme bedeutet. Erschwert wird dies noch durch die vor Ort herrschenden Umweltbedingungen, die einem rauhen Bergwerksbetrieb entsprechen können. Dabei gilt es, den Bedingungen des untertägigen Steinkohlenbergbaus ebenso gerecht zu werden, wie den Bedingungen im Braunkohlen-Tagebau oder dem Erzbergbau über und unter Tage. Besondere Anforderungen müssen beim Einsatz in Gebieten mit extremen klimatischen Bedingungen erfüllt werden. Genannt werden soll hier der Einsatz in Wüstengebieten, in den Tropen, in Gebirgsregionen und unter arktischen Bedingungen.

Da die Messungen kontinuierlich an der laufenden Bandanlage erfolgen müssen, muß auch der Tatsache Rechnung getragen werden, daß der Meßort nicht nur mit der Bandgeschwindigkeit von bis zu 8 m/sec. in Bandlängsrichtung wandert, sondern daß auch laterale Verlagerungen von bis zu ± 100 mm und vertikale Verlagerungen der Fördergurtoberfläche von ca. ± 10 mm in Form von Schwingungen auftreten können.

Die Verbindungslängen der Fördergurte liegen, abhängig vom Gurttyp und der Festigkeit, zwischen ≤ 1 m und 8 m. Die Meßwertauflösung und die Meßgenauigkeit sollten in der Größenordnung von 1 mm oder besser sein.

Im Hintergrund dieser Gesamtproblematik zeichnet sich die erfindungsgemäße Einrichtung gemäß Patentanspruch 1 dadurch aus, daß diese aus wenigstens folgenden Komponenten besteht, nämlich aus:
- wenigstens zwei, insbesondere vier Meßmarken, die so angeordnet sind, daß sich jeweils wenigstens eine Meßmarke, insbesondere zwei Meßmarken, im Bereich des Verbindungsanfanges bzw. Verbindungsendes befinden und dabei dauerhaft in den Randbereich von Lauf- oder Tragseite des Fördergurtes oder innerhalb der sich zwischen Lauf- und Tragseite erstreckenden Randzone eingearbeitet sind, wobei die Meßmarken beständig gegenüber größeren Temperatur- und Druckbeanspruchungen sowie gegenüber Feuchtigkeit und anderen mechanischen und chemischen Beanspruchungen sind;
- einem dem Meßmarkentyp angepaßten Meßmarkendetektionssystem zwecks Messung der Geschwindigkeit wie auch der Verbindungslänge, wobei das Meßmarkendetektionssystem in Bewegungsrichtung des Fördergurtes gesehen links und/oder rechts angeordnet ist;
- einer Signalaufbereitung für das Meßmarkendetektionssystem auf der Basis einer Zeitmessung, wobei die von den Meßmarkendetektoren gelieferten Signale so aufbereitet und angepaßt werden, daß der Beginn und das Ende der Zeitmessung zuverlässig und genau ausgelöst werden kann;
- einem von der Laufrichtung des Fördergurtes unabhängigen Identifikationssystem, umfassend
   - eine Adresse zwecks Identifikation des Meßortes, die sich außerhalb des Verbindungsbereiches in der Nähe von Verbindungsanfang und/oder Verbindungsende befindet, wobei die Adresse in Bewegungsrichtung des Fördergurtes gesehen links und/oder rechts angeordnet ist, und zwar innerhalb des Randbereiches von Lauf- oder Tragseite des Fördergurtes oder innerhalb der sich zwischen Lauf- und Tragseite erstreckenden Randzone;
   - einem dem Adressentyp angepaßten Adressendetektor, der ebenfalls in Bewegungsrichtung des Fördergurtes gesehen links und/oder rechts angeordnet ist; sowie
   - einem Lesegerät für die Adresse, das wiederum mit dem Adressendetektor verbunden ist;
- einem Zeitmeßgfied, das mit der Signalaufbereitung für das Meßmarkendetektionssystem in Verbindung steht;
- einem Meßsystem zur Ermittlung der Gurt- und Umgebungstemperatur;
- einem weiteren Meßsystem zur Ermittlung der Gurtzugkraft; sowie
- einem Prozeßrechner zwecks Auswertung aller Daten, wobei der Prozeßrechner wiederum mit einer Antriebssteuerung in Verbindung steht.

Zweckmäßige Ausgestaltungen der erfindungsgemäßen Einrichtung sind in den Patentansprüchen 2 bis 31 genannt.

Die Erfindung wird nun anhand von Ausführungsbeispielen unter Bezugnahme auf schematische Zeichnungen erläutert. Es zeigen:
- Fig. 1: eine Einrichtung mit einem Meßmarkendetektionssystem, bei dem die Detektoren in Höhe der sich zwischen der Lauf- und Tragseite des Fördergurtes erstreckenden Randzone angeordnet sind, sowie mit einem Identifikationssystem, bei dem die Adresse ein Code, beispielsweise ein Barcode, ist;
- Fig. 2: eine Einrichtung mit einem Meßmarkendetektionssystem mit dem gleichen Anordnungsprinzip wie bei Fig. 1, jedoch mit einem Identifikationssystem, bei dem die Adresse ein Transponder ist;
- Fig. 3: eine Einrichtung mit einem Meßmarkendetektionssystem, umfassend vier Sensorköpfe, die oberhalb der Tragseite im Randbereich des Fördergurtes angeordnet sind, wobei das Meßmarkendetektionssystem und das Identifikationssystem ein integriertes Gesamtsystem bilden; sowie
- Fig. 4: eine Einrichtung zur Ermittlung der Gurt- und Umgebungstemperatur sowie der Gurtzugkraft.

In Verbindung mit diesen Figuren gilt folgende Bezugsziffernliste:
- 1: Fördergurt
- 2: Festigkeitsträger (Zugträger) aus Stahl
- 3: Laufseite des Fördergurtes
- 4: Tragseite des Fördergurtes
- 5: Randzone des Fördergurtes
- 6: Verbindungsbereich des Fördergurtes mit der Verbindungslänge L
- 7: Verbindungsanfang
- 8: Verbindungsende
- 9: Meßmarke
- 10: Meßmarke
- 11: Meßmarkendetektor
- 12: Meßmarkendetektor
- 13: Meßmarkendetektor
- 14: Adresse in Form eines Codes (Barcode)
- 15: Adressendetektor
- 16: Lesegerät für den Code (Barcode)
- 17: Signalaufbereitung
- 18: Signalaufbereitung
- 19: Zeitmeßglied
- 20: Prozeßrechner
- 21: Antriebssteuerung
- 22: Adresse in Form eines Transponders
- 23: Antenne
- 24: Lesegerät für den Transponder
- 25: Meßmarke
- 26: Meßmarke
- 27: Meßmarke
- 28: Meßmarke
- 29: Adresse in Form eines Dauermagneten
- 30: Adresse in Form eines Dauermagneten
- 31: Energieversorgung
- 32: Antriebstrommel
- 33: Signalaufbereitung
- I: Meßmarkendetektionssystem
- II: ldentifikationssystem
- III: Meßmarkendetektions- und Identifikationssystem unter Verwendung von vier Sensorköpfen A, B, C, D
- IV: Meßsystem zur Ermittlung der Gurt- und Umgebungstemperatur
- V: Meßsystem zur Ermittlung der Gurtzugkraft
- u: Abstand zwischen zwei Detektoren bzw. Sensorköpfen
- v: Abstand zwischen der Adresse und dem Verbindungsanfang bzw. Verbindungsende

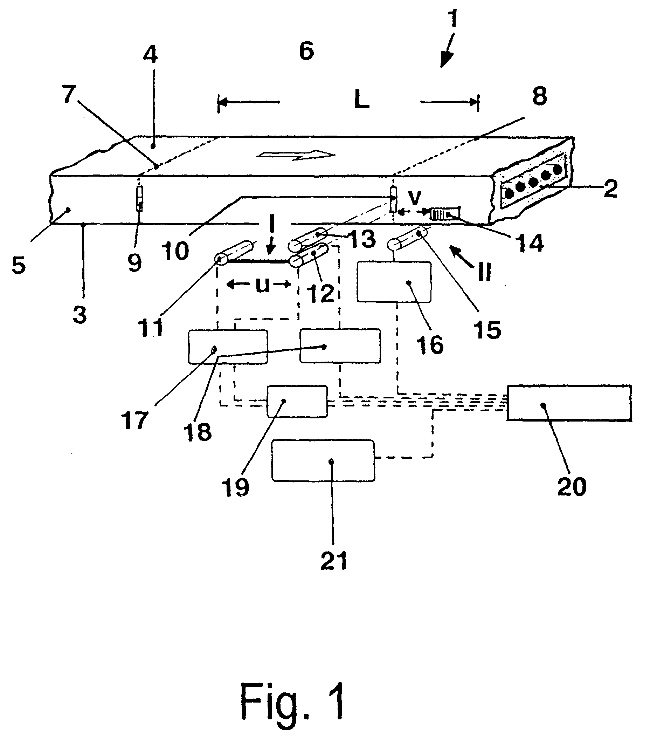

Fig. 1 zeigt einen Fördergurt **1** aus Gummi oder gummiähnlichem Kunststoff mit eingebetteten Festigkeitsträgern **2** in Form von Stahlseilen, insbesondere in Verbindung mit einer zusätzlichen Synthesecord-Querarmierung zwecks Schlitz- und Aufschlagsschutz. Der erfindungsgemäße Verbindungsbereich **6** mit der Länge **L** ist in Bewegungsrichtung (Pfeilrichtung) des Fördergurtes durch einen Verbindungsanfang **7** und ein Verbindungsende **8** eingegrenzt.

Direkt innerhalb des Verbindungsanfanges **7** und Verbindungsendes **8** befindet sich jeweils wenigstens eine Meßmarke **9** bzw. **10,** die innerhalb der sich zwischen Laufseite **3** und Tragseite **4** des Fördergurtes erstreckenden Randzone **5** eingearbeitet ist. Die Meßmarken müssen beständig sein gegenüber größeren Temperatur- und Druckbeanspruchungen sowie gegenüber Feuchtigkeit und anderen mechanischen und chemischen Beanspruchungen. Die Meßmarken bestehen ferner vorzugsweise aus einem Werkstoff mit elektrischen und/oder magnetischen Eigenschaften, insbesondere in Form von kleineren Metallstreifen oder Dauermagneten. Alternativ hierzu können die Meßmarken auch optische Markierungen oder mechanisch angebracht Kerben oder Erhebungen (Vorsprünge) sein.

Den Meßmarken **9** und **10** ist ein Meßmarkendetektionssystem **I** zugeordnet zwecks Messung der Geschwindigkeit wie auch der Verbindungslänge. Dieses Meßsystem umfaßt zwei Detektoren **11** und **12,** die in Bewegungsrichtung des Fördergurtes gesehen in einem Abstand **u** zueinander angeordnet sind, der die Meßstrecke für die Messung der Geschwindigkeit ist. Der Abstand **u** ist entweder kleiner als die Verbindungslänge **L** oder entspricht vorzugsweise etwa dieser Verbindungslänge. Ein weiterer Detektor **13** übernimmt die Messung der Verbindungslänge. Gegebenenfalls kann auf den Detektor **13** verzichtet werden. Dann übernimmt wenigstens einer der beiden Detektoren **11** und **12** die Messung der Verbindungslänge.

Bei dem Meßmarkendetektionssystem **I** gelangen vorzugsweise Sensoren auf Basis von Radar/Mikrowellen, induktive Verfahren, optische oder optoelektrische Methoden, einschließlich Lasersensorik, magnetosensitive Systeme, insbesondere Hall-Sensoren oder magnetoresistive Sensoren, sowie ionisierende Strahlung zum Einsatz.

Ein von der Laufrichtung des Fördergurtes unabhängiges identifikationssystem **II** umfaßt eine Adresse **14** zwecks Identifikation des Meßortes, die sich außerhalb des Verbindungsbereiches **6** in der Nähe von dem Verbindungsende **8** befindet. Der Abstand der Adresse **14** zum Verbindungsende **8** ist dabei kleiner als die Verbindungslänge **L**, insbesondere kleiner als 1/4 der Verbindungslänge. Die Adresse ist hier ein Code, insbesondere unter dem Gesichtspunkt einer mechanischen, optischen, magnetischen, elektrisch leitenden oder radioaktiven Erfassung. Bevorzugt wird dabei ein Barcode oder ein Code, der barcodeähnlich strukturiert ist.

Weitere Teile des Identifikationssystems **II** sind ein Adressendetektor **15** sowie ein Lesegerät **16** für die Adresse **14,** das wiederum mit dem Adressendetektor verbunden ist.

Die gesamte Einrichtung wird ergänzt durch eine Signalaufbereitung **17** und **18** auf der Basis einer Zeitmessung, die mit dem Meßmarkendetektionssystem **I** einerseits und mit einem Zeitmeßglied **19** anderseits in Verbindung steht. Wichtig ist hierbei, daß die von den Meßmarkendetektoren gelieferten Signale so aufbereitet und angepaßt werden, daß der Beginn und das Ende der Zeitmessung zuverlässig und genau ausgelöst werden kann.

Vorteilhafterweise sind die Meßmarken **9** und **10** sowie das Meßmarkendetektionssystem **I** und das Identifikationssystem **II** in Bewegungsrichtung des Fördergurtes gesehen links und rechts angeordnet.

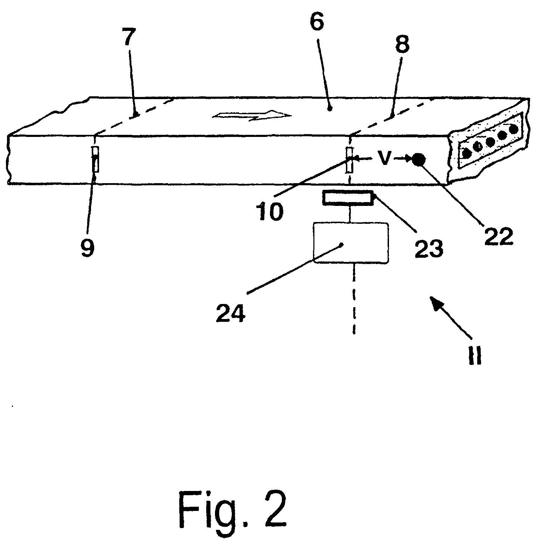

Bei dem Ausführungsbeispiel gemäß Fig. 2 wird hinsichtlich der Meßmarken **9** und **10** und dem dazugehörenden Meßmarkendetektionssystem auf die Fig. 1 verwiesen.

Völlig anders aufgebaut ist im Rahmen dieses Ausführungsbeispiels das Identifikationssystem **II,** das eine Adresse **22** in Form eines Transponders umfaßt. Der entsprechende Adressendetektor ist eine Antenne **23** mit einem dazugehörenden Sende- und Empfangs- und Lesegerät. Mit der Antenne verbunden ist auch hier ein Lesegerät **24** für den Transponder. Vorteilhafterweise ist auch dieses Identifikationssystem in Bewegungsrichtung des Fördergurtes gesehen links und rechts angeordnet.

Hinsichtlich der weiteren Einrichtungsteile wird auf die Fig. 1 verwiesen.

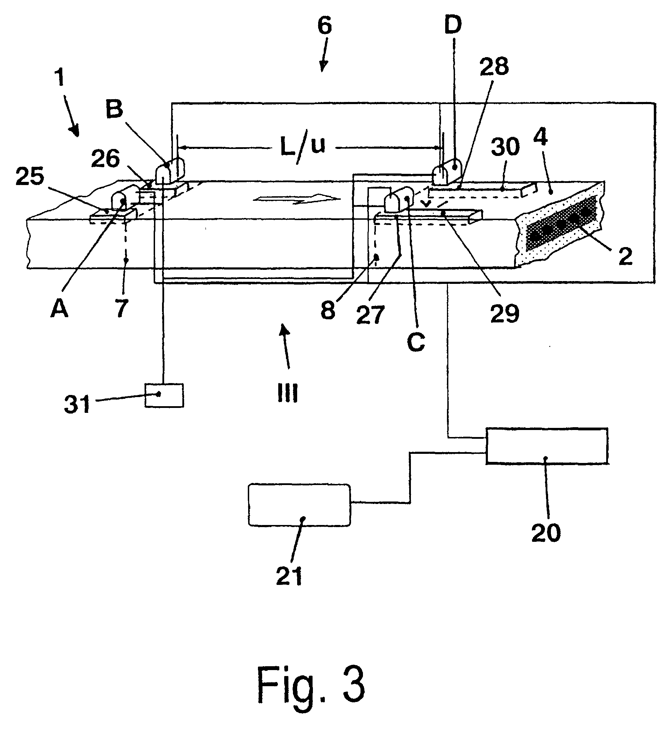

Fig. 3 zeigt nun eine besonders zweckmäßige Variante der Einrichtung der Verbindungsüberwachung des Fördergurtes **1** mit wiederum eingebetteten Festigkeitsträgern **2** aus Stahl.

Außerhalb des Verbindungsbereiches **6**, und zwar unter Angrenzung an den Verbindungsanfang **7** und das Verbindungsende **8** sind insgesamt vier Meßmarken **25, 26, 27** und **28** angeordnet. Jede Meßmarke ist dabei im Randbereich der Tragseite **4** des Fördergurtes eingearbeitet. Im Abstand **v** zum Verbindungsende **8** sind ferner zwei Adressen **28** und **29** vorhanden, die ebenfalls im Randbereich der Tragseite **4** des Fördergurtes eingearbeitet sind. Die Meßmarken **27** und **28** im Bereich des Verbindungsendes **8** bilden dabei mit den Adressen **29** bzw. **30** einen einstückigen Verbund. Meßmarken und Adresse bestehen aus Dauermagneten, und zwar in Form einer Reihenanordnung. Vorteilhafterweise sind die Meßmarken und die Adresse in Gummi oder gummiähnlichem Kunststoff eingebettet.

Das gesamte Meßmarkendetektions- und Identifikationssystem **III** beinhaltet hier vier Sensorköpfe **A, B, C** und **D,** die oberhalb der Tragseite **4** des Fördergurtes angeordnet sind. Dabei entspricht in Bewegungsrichtung des Fördergurtes gesehen der Abstand **u** zwischen den beiden Sensorköpfen **A** und **C** bzw. **B** und **D** etwa der Verbindungsiänge **L.** Diese vier Sensorköpfe sind vorzugsweise in einem Metallgehäuse, beispielsweise aus Aluminium, untergebracht. Mit diesem Gesamtsystem **III,** das mit einer Energieversorgung **31** in Verbindung steht, erfolgt gleichzeitig die Messung der Geschwindigkeit und der Verbindungslänge sowie die Identifikation des Meßortes.

Für das in diesem Gesamtsystem **III** integrierte Meßmarkendetektionssystem ist wie bei dem Ausführungsbeispiel gemäß Fig. 1 oder 2 eine Signalaufbereitung auf der Basis einer Zeitmessung sowie ein Zeitmeßglied erforderlich. Die Auswertung aller Daten erfolgt auch hier mit einem Prozeßrechner **20**.

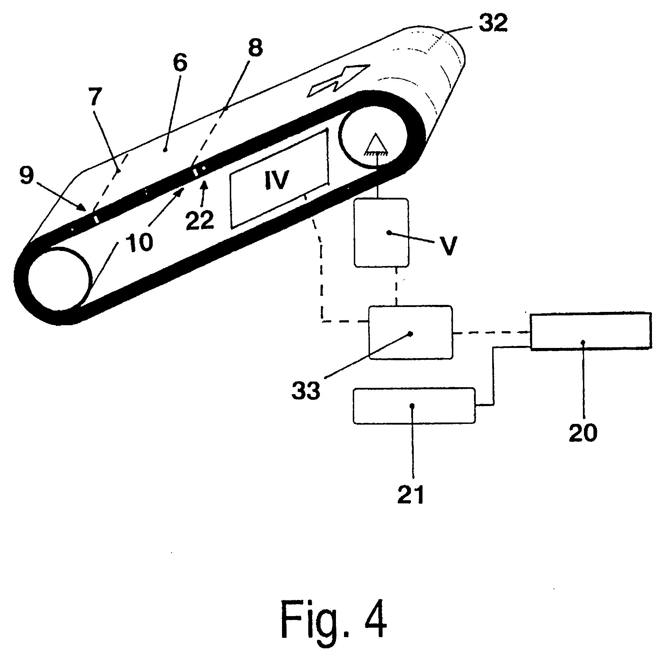

Fig. 4 zeigt nun eine vereinfachte Darstellung einer Förderanlage, wobei hinsichtlich der Beschreibung der Meßmarken **9** und **10**, die direkt innerhalb des Anfanges **7** und Endes **8** des Verbindungsbereiches **6** angeordnet sind, sowie der Adresse **22** in Form eines Transponders auf die Fig. 2 verwiesen wird.

Die Einrichtung zur Verbindungsüberwachung ist mit einem Meßsystem **IV** zur Ermittlung der Gurt- und Umgebungstemperatur ausgestattet.

Hinsichtlich der Messung der Gurttemperatur ist dabei folgendes zu beachten.

Da die Temperaturmessung kontinuierlich am laufenden Gurt erfolgen muß, wird diese Aufgabe insbesondere mit der Infrarot-Meßtechnik gelöst. Das einzusetzende Meßsystem muß dabei den Umgebungsbedingungen am Einsatzort entsprechend dimensioniert sein. Besonders der Verschmutzungsgefahr muß durch geeignete konstruktive Maßnahmen begegnet werden, beispielsweise durch Freiblasen der Optik mit gefilterter Luft. Der Meßbereich sollte von -40°C bis +100°C reichen, und zwar nach örtlichen Bedingungen. Das Meßsystem muß bei Umgebungstemperaturen von -20°C bis +60°C sicher funktionieren. Im Bedarfsfall muß den besonderen Bedingungen des untertätigen Steinkohlebergbaus Rechnung getragen werden.

Was die Messung der Umgebungstemperatur betrifft, so muß folgendes erwähnt werden.

Diese Meßaufgabe wird vorzugsweise mit einem Meßsystem auf der Basis eines Meßelementes, beispielsweise eines Thermoelementes oder Widerstandsthermometers, gelöst. Das Meßsystem muß dabei bei den gegebenen Umweltbedingungen sicher und mit ausreichender Genauigkeit funktionieren, und zwar bei einem Meßbereich von -40°C bis +60°C. Im Bedarfsfall muß auch hier den Bedingungen des untertägigen Steinkohlenbergbaus Rechnung getragen werden.

Ein weiteres System, nämlich das Meßsystem **V** zur Ermittlung der Gurtzugkraft, muß entsprechend den für die jeweilige Anlage geltenden Bedingungen konzipiert und in diese integriert werden. In Frage kommen insbesondere Meßsysteme auf Basis von Meßlagern, hydraulischen Systemen (Druckmeßdosen) oder Drehmomentmeßnaben, die vorzugsweise in der Antriebstrommel **32** oder in der Umlenktrommel größter Zugkraft angeordnet sind. Es ist weiterhin auch möglich, die Leistungsaufnahme des Antriebs für diesen Zweck zu benutzen, wenn diese mit entsprechender Genauigkeit gemessen werden kann. Die Meßgenauigkeit sollte bei ±3% oder besser liegen.

Es ist ferner von Vorteil, wenn das Meßergebnis im Rahmen der Ermittlung der Gurtund Umgebungstemperatur wie auch der Gurtzugkraft als digitales Signal (Signalaufbereitung **33**) direkt dem Prozeßrechner **20** zugeführt wird.

Ferner ist es zweckmäßig, die Meßsysteme **IV** und **V** in Bewegungsrichtung des Fördergurtes gesehen links und rechts anzuordnen.

## Patentansprüche

1. Einrichtung zur kontinuierlichen Überwachung einer Verbindung eines Fördergurtes (1) aus Gummi oder gummiähnlichem Kunststoff, der insbesondere mit eingebetteten Festigkeitsträgern (2) versehen ist, wobei der Verbindungsbereich (6) einen Anfang (7) und ein Ende (8) umfaßt und die Einrichtung zwecks Erfassung von Sollwertabweichungen aus wenigstens folgenden Komponenten besteht, nämlich aus:
- wenigstens zwei, insbesondere vier Meßmarken (9, 10, 25, 26, 27, 28), die so angeordnet sind, daß sich jeweils wenigstens eine Meßmarke, insbesondere zwei Meßmarken, im Bereich des Verbindungsanfanges (7) bzw. Verbindungsendes (8) befinden und dabei dauerhaft in den Randbereich von Laufseite (3) oder Tragseite (4) des Fördergurtes oder innerhalb der sich zwischen Lauf- und Tragseite erstreckenden Randzone (5) eingearbeitet sind, wobei die Meßmarken beständig gegenüber größeren Temperatur- und Druckbeanspruchungen sowie gegenüber Feuchtigkeit und anderen mechanischen und chemischen Beanspruchungen sind;
- einem dem Meßmarkentyp angepaßten Meßmarkendetektionssystem (I, III) zur Messung der Geschwindigkeit wie auch der Verbindungslänge, wobei das Meßmarkendetektionssystem in Bewegungsrichtung des Fördergurtes gesehen links und/oder rechts angeordnet ist;
- einer Signalaufbereitung (17, 18) für das Meßmarkendetektionssystem auf der Basis einer Zeitmessung, wobei die von den Meßmarkendetektoren (11,12, 13; A, B, C, D) gelieferten Signale so aufbereitet und angepaßt werden, daß der Beginn und das Ende der Zeitmessung zuverlässig und genau ausgelöst werden kann;
- einem von der Laufrichtung des Fördergurtes unabhängigen Identifikationssystem (II, III), umfassend
- eine Adresse (14, 22, 29, 30) zwecks Identifikation des Meßortes, die sich außerhalb des Verbindungsbereiches (6) in der Nähe von Verbindungsanfang (7) und/oder Verbindungsende (8) befindet, wobei die Adresse in Bewegungsrichtung des Fördergurtes gesehen links und/oder rechts angeordnet ist, und zwar innerhalb des Randbereiches von Laufseite (3) oder Tragseite (4) des Fördergurtes oder innerhalb der sich zwischen Lauf- und Tragseite erstreckenden Randzone (5);
- einem dem Adressentyp angepaßten Adressendetektor (15, 23; C, D), der ebenfalls in Bewegungsrichtung des Fördergurtes gesehen links und/oder rechts angeordnet ist; sowie
- einem Lesegerät (16, 24) für die Adresse, das wiederum mit dem Adressendetektor verbunden ist;
- einem Zeitmeßglied (19), das mit der Signalaufbereitung für das Meßmarkendetektionssystem in Verbindung steht;
- einem Meßsystem (IV) zur Ermittlung der Gurt- und Umgebungstemperatur;
- einem weiteren Meßsystem (V) zur Ermittlung der Gurtzugkraft; sowie
- einem Prozeßrechner (20) zwecks Auswertung aller Daten, wobei der Prozeßrechner (21) wiederum mit einer Antriebssteuerung in Verbindung steht.

2. Einrichtung nach Anspruch 1, bei der sich die Meßmarken (9, 10) direkt innerhalb des Verbindungsanfanges (7) bzw. Verbindungsendes (8) befinden.

3. Einrichtung nach Anspruch 1, bei der sich die Meßmarken (25, 26, 27, 28) außerhalb des Verbindungsbereiches (6) befinden, und zwar unter Angrenzung an den Verbindungsanfang (7) bzw. an das Verbindungsende (8).

4. Einrichtung nach einem der Ansprüche 1 bis 3, bei der die Meßmarken (9, 10, 25, 26, 27, 28) aus einem Werkstoff mit elektrischen und/oder magnetischen Eigenschaften bestehen, insbesondere in Form von kleineren Metallstreifen oder Dauermagneten, wobei die Dauermagnete vorzugsweise in Form einer Reihenanordnung vorliegen.

5. Einrichtung nach einem der Ansprüche 1 bis 3, bei der die Meßmarken optische Markierungen oder mechanisch angebrachte Kerben oder Erhebungen sind.

6. Einrichtung nach einem der Ansprüche 1 bis 5, bei der die Adresse (14, 22, 29, 30) zum Verbindungsanfang (7) bzw. Verbindungsende (8) einen Abstand (v) aufweist, der kleiner ist als die Verbindungslänge (L), insbesondere kleiner ist als 1/4 der Verbindungslänge.

7. Einrichtung nach einem der Ansprüche 1 bis 6, bei der die Adresse (14, 29, 30) des Identifikationssystems ein Code ist, insbesondere unter dem Gesichtspunkt einer mechanischen, optischen, magnetischen, elektrisch leitenden oder radioaktiven Erfassung.

8. Einrichtung nach Anspruch 7, wobei der Code (14) ein Barcode oder barcodeähnlich strukturiert ist.

9. Einrichtung nach Anspruch 7, wobei der Code (29, 30) aus kleinen Dauermagneten besteht, und zwar in Form einer Reihenanordnung.

10. Einrichtung nach einem der Ansprüche 1 bis 6, bei der die Adresse (22) des Identifikationssystems ein Transponder ist, wobei der Adressendetektor eine Antenne (23) mit einem dazugehörenden Sende- und Empfangs- und Lesegerät ist.

11. Einrichtung nach einem der Ansprüche 1 bis 10, bei der die Adresse (14, 22) des Identifikationssystems (II) in Bezug auf die Meßmarken ein getrenntes Teil ist.

12. Einrichtung nach einem der Ansprüche 1 bis 10, insbesondere in Verbindung mit Anspruch 9, wobei die Adresse (29, 30) des Identifikationssystems (III) und die Meßmarken (25, 26, 27, 28) ein einziges Bauteil bilden.

13. Einrichtung nach einem der Ansprüche 1 bis 12, bei der die Meßmarken (9, 10, 25, 26, 27, 28) und/oder die Adresse (14, 22, 29, 30) in Gummi oder gummiähnlichem Kunststoff eingebettet sind.

14. Einrichtung nach einem der Ansprüche 1 bis 13, bei der die Meßmarken (9, 10) wie auch die Adresse (14, 22) innerhalb der sich zwischen Laufseite (3) und Tragseite (4) des Fördergurtes erstreckenden Randzone (5) eingearbeitet sind.

15. Einrichtung nach einem der Ansprüche 1 bis 13, bei der die Meßmarken (25, 26, 27, 28) wie auch die Adresse (29, 30) in den Randbereich von Tragseite (4) des Fördergurtes eingearbeitet sind.

16. Einrichtung nach einem der Ansprüche 1 bis 15, in der bei dem Meßmarkendetektionssystem (I, III) Sensoren auf Basis von Radar/Mikrowellen, induktive Verfahren, optische oder optoelektrische Methoden, einschließlich Lasersensorik, magnetosensitive Systeme, insbesondere Hall-Sensoren oder magnetoresistive Sensoren, sowie ionisierende Strahlung zum Einsatz gelangen.

17. Einrichtung nach einem der Ansprüche 1 bis 16, bei der das Meßmarkendetektionssystem (I, III) aus wenigstens zwei Detektoren besteht, die in Bewegungsrichtung des Fördergurtes gesehen in einem Abstand (u) zueinander angeordnet sind, der die Meßstrecke für die Messung der Geschwindigkeit ist.

18. Einrichtung nach Anspruch 17 in Verbindung mit Anspruch 14, bei der die Detektoren (11, 12, 13) in Höhe der sich zwischen der Laufseite (3) und Tragseite (4) des Fördergurtes erstreckenden Randzone (5) angeordnet sind.

19. Einrichtung nach Anspruch 18, wobei der Abstand (u) zwischen zwei in Bewegungsrichtung des Fördergurtes angeordneten Detektoren (11, 12) kleiner ist als die Verbindungslänge (L), insbesondere jedoch etwa der Verbindungslänge entspricht.

20. Einrichtung nach Anspruch 18 oder 19, bei der wenigstens einer der beiden Detektoren (11, 12), die in Bewegungsrichtung des Fördergurtes gesehen in einem Abstand (u) zueinander angeordnet sind, zugleich die Messung der Verbindungslänge übernimmt.

21. Einrichtung nach Anspruch 18 oder 19, bei der unter Verwendung eines weiteren Detektors (13) die Messung der Verbindungslänge erfolgt.

22. Einrichtung nach Anspruch 17 in Verbindung mit Anspruch 15, insbesondere wiederum in Verbindung mit den Ansprüchen 9 und 12, bei der das Meßmarkendetektionssystem (III) aus wenigstens zwei, insbesondere vier Detektorenköpfen, insbesondere Sensorköpfen (A, B, C, D), besteht, die oberhalb der Tragseite (4) des Fördergurtes angeordnet und dabei vorzugsweise in einem Metallgehäuse untergebracht sind, wobei mittels der Detektorenköpfe zugleich die Messung der Verbindungslänge erfolgt.

23. Einrichtung nach Anspruch 22, wobei der Abstand (u) zwischen zwei in Bewegungsrichtung des Fördergurtes angeordneten Detektorenköpfen, insbesondere Sensorköpfen (A, C), etwa der Verbindungslänge (L) entspricht.

24. Einrichtung nach einem der Ansprüche 1 bis, 23, insbesondere in Verbindung mit einem der Ansprüche 18 bis 21, bei der das Meßmarkendetektionssystem (I) und das Identifikationssystem (II) getrennt arbeitende Komponenten sind.

25. Einrichtung nach einem der Ansprüche 1 bis 23, insbesondere in Verbindung mit Anspruch 22 oder 23, bei der das Meßmarkendetektionssystem und das Identifkationssystem ein integriertes Gesamtsystem (III) bilden.

26. Einrichtung nach einem der Ansprüche 1 bis 25, bei der das Meßsystem (IV) zur Ermittlung der Gurttemperatur auf der Basis der Infrarot-Meßtechnik beruht.

27. Einrichtung nach einem der Ansprüche 1 bis 26, bei der das Meßsystem (IV) zur Ermittlung der Umgebungstemperatur auf der Basis eines Meßelementes, beispielsweise eines Thermoelementes oder Widerstandsthermometers, beruht.

28. Einrichtung nach einem der Ansprüche 1 bis 27, bei der das Meßsystem (V) zur Ermittlung der Gurtzugkraft auf der Basis eines Meßlagers, eines hydraulischen Systems oder einer Drehmomentmeßnabe beruht.

29. Einrichtung nach einem der Ansprüche 1 bis 28, insbesondere in Verbindung mit Anspruch 28, bei der das Meßsystem zur Ermittlung der Gurtzugkraft in der Antriebstrommel (32) oder in der Umlenktrommel größter Zugkraft angeordnet ist.

30. Einrichtung nach einem der Ansprüche 26 bis 29, bei der das jeweilige Meßsystem (IV, V) in Bewegungsrichtung des Fördergurtes gesehen links und/oder rechts angeordnet ist.

31. Einrichtung nach einem der Ansprüche 1 bis 30, insbesondere in Verbindung mit einem der Ansprüche 26 bis 30, bei der das Meßergebnis im Rahmen der Ermittlung der Gurt- und Umgebungstemperatur wie auch der Gurtzugkraft als digitales Signal in Form einer Signalaufbereitung (33) direkt dem Prozeßrechner (20) zugeführt wird.

## Claims

1. Device for continuously monitoring a junction of a conveyor belt (1) made of rubber or rubber-like plastic, which in particular is provided with embedded strength members (2), wherein the junction area (6) comprises a start (7) and an end (8) and the device for the purpose of measuring set value discrepancies consists of at least the following components, namely of:
- at least two, in particular four measuring marks (9, 10, 25, 26, 27, 28), which are arranged so that in each case at least one measuring mark, in particular two measuring marks, are located in the area of the start (7) of the junction or the end (8) of the junction and in the process are durably incorporated in the edge area of the backing side (3) or carrying side (4) of the conveyor belt or inside the edge zone (5) extending between the backing side and the carrying side, the measuring marks being resistant to fairly large temperature and pressure stresses and to moisture and other mechanical and chemical stresses;
- a measuring mark detection system (I, III) adapted to the measuring mark type for measuring the speed and the junction length, the measuring mark detection system being arranged on the left and/or the right viewed in the direction of movement of the conveyor belt;
- a signal processing unit (17, 18) for the measuring mark detection system based on time measurement, wherein the signals supplied by the measuring mark detectors (11, 12, 13; A, B, C, D) are processed and adapted so that the beginning and the end of the time measurement can be triggered reliably and accurately;
- an identification system (II, III) independent of the running direction of the conveyor belt, comprising
- an address (14, 22, 29, 30) for the purpose of identification of the measuring location, which is located outside the junction area (6) in the vicinity of the start (7) of the junction and/or the end (8) of the junction, the address being arranged on the left and/or right viewed in the direction of movement of the conveyor belt, inside the edge area of the backing side (3) or carrying side (4) of the conveyor belt or inside the edge zone (5) extending between the backing side and the carrying side;
- an address detector (15, 23; C, D) adapted to the address type and also arranged on the left and/or right viewed in the direction of movement of the conveyor belt, and
- a reader (16, 24) for the address, which in turn is connected to the address detector;
- a time measuring element (19) which is connected to the signal processing unit for the measuring mark detection system;
- a measuring system (IV) for measuring the belt temperature and ambient temperature;
- a further measuring system (V) for measuring the belt tensile force, and
- a process computer (20) for the purpose of evaluating all the data, the process computer (21) being in turn connected to a drive controller.

2. Device according to claim 1, in which the measuring marks (9, 10) are located directly inside the start (7) of the junction or the end (8) of the junction.

3. Device according to claim 1, in which the measuring marks (25, 26, 27, 28) are located outside the junction area (6), adjacent to the start (7) of the junction or the end (8) of the junction.

4. Device according to one of claims 1 to 3, in which the measuring marks (9, 10, 25, 26, 27, 28) consist of a material with electrical and/or magnetic properties, in particular in the form of fairly small metal strips or permanent magnets, the permanent magnets being preferably present in the form of a row arrangement.

5. Device according to one of claims 1 to 3, in which the measuring marks are optical marks or mechanically applied notches or projections.

6. Device according to one of claims 1 to 5, in which the address (14, 22, 29, 30) is a distance (v) from the start (7) of the junction or the end (8) of the junction which is smaller than the junction length (L), in particular smaller than a quarter of the junction length.

7. Device according to one of claims 1 to 6, in which the address (14, 29, 30) of the identification system is a code, in particular from the viewpoint of mechanical, optical, magnetic, electrically conducting or radio active detection.

8. Device according to claim 7, in which the code (14) is a bar code or structured like a bar code.

9. Device according to claim 7, in which the code (29, 30) consists of small permanent magnets, in the form of a row arrangement.

10. Device according to one of claims 1 to 6, in which the address (22) of the identification system is a transponder, the address detector being an antenna (23) with an associated transmitter and receiver and reader.

11. Device according to one of claims 1 to 10, in which the address (14, 22) of the identification system (II) in relation to the measuring marks is a separate part.

12. Device according to one of claims 1 to 10, in particular in conjunction with claim 9, in which the address (29, 30) of the identification system (III) and the measuring marks (25, 26, 27, 28) form a single component.

13. Device according to one of claims 1 to 12, in which the measuring marks (9, 10, 25, 26, 27, 28) and/or the address (14, 22, 29, 30) are embedded in rubber or rubber-like plastic.

14. Device according to one of claims 1 to 13, in which the measuring marks (9, 10) and the address (14, 22) are incorporated inside the edge zone (5) extending between the backing side (3) and the carrying side (4) of the conveyor belt.

15. Device according to one of claims 1 to 13, in which the measuring marks (25, 26, 27, 28) and the address (29, 30) are incorporated in the edge area of the carrying side (4) of the conveyor belt.

16. Device according to one of claims 1 to 15, in which with the measuring mark detection system (I, III) sensors based on radar/microwaves, inductive processes, optical or optoelectrical methods, including laser sensors, magneto sensitive systems, in particular Hall sensors or magneto resistive sensors, and ionising radiation are used.

17. Device according to one of claims 1 to 16, in which the measuring mark detection system (I, III) consists of at least two detectors which, viewed in the direction of movement of the conveyor belt, are arranged at a distance (u) from one another which is the measuring path for measurement of the speed.

18. Device according to claim 17 in conjunction with claim 14, in which the detectors (11, 12, 13) are arranged level with the edge zone (5) extending between the backing side (3) and the carrying side (4) of the conveyor belt.

19. Device according to claim 18, in which the distance (u) between two detectors (11, 12) arranged in the direction of movement of the conveyor belt is smaller than the junction length (L), and in particular roughly equal to the junction length.

20. Device according to claim 18 or 19, in which at least one of the two detectors (11, 12) which are arranged a distance (u) from one another viewed in the direction of movement of the conveyor belt, also carries out the measurement of the junction length.

21. Device according to claims 18 or 19, in which the junction length is measured using a further detector (13).

22. Device according to claim 17 in conjunction with claim 15, in particular again in conjunction with claims 9 and 12, in which the measuring mark detection system (III) consists of at least two, in particular four detector heads, in particular sensor heads (A, B, C, D), which are arranged above the carrying side (4) of the conveyor belt and preferably accommodated in a metal housing, and the junction length is also measured by means of the detector heads.

23. Device according to claim 22, in which the distance (u) between two detector heads, in particular sensor heads (A, C), arranged in the direction of movement of the conveyor belt roughly corresponds to the junction length (L).

24. Device according to one of claims 1 to 23, in particular in conjunction with one of claims 18 to 21, in which the measuring mark detection system (I) and the identification system (II) are components which work separately.

25. Device according to one of claims 1 to 23, in particular in conjunction with claim 22 or 23, in which the measuring mark detection system and the identification system form an integrated overall system (III).

26. Device according to one of claims 1 to 25, in which the measuring system (IV) for measuring the belt temperature is based on the infrared measuring technique.

27. Device according to one of claims 1 to 26, in which the measuring system (IV) for measuring the ambient temperature is based on a measuring element, for example a thermoelement or resistance thermometer.

28. Device according to one of claims 1 to 27, in which the measuring system (V) for measuring the belt tensile force is based on a measuring mounting, a hydraulic system or a torque measuring hub.

29. Device according to one of claims 1 to 28, in particular in conjunction with claim 28, in which the measuring system for measuring the belt tensile force is arranged in the driving drum (32) or in the idler drum with the greatest tensile force.

30. Device according to one of claims 26 to 29, in which the respective measuring system (IV, V) is arranged on the left and/or right viewed in the direction of movement of the conveyor belt.

31. Device according to one of claims 1 to 30, in particular in conjunction with one of claims 26 to 30, in which the measuring result from the measurement of the belt temperature and ambient temperature and the belt tensile force is fed as a digital signal in the form of a processed signal (33) directly to the process computer (20).

## Revendications

1. Dispositif de surveillance continue d'une jonction d'une bande transporteuse (1) en caoutchouc ou en une matière synthétique analogue à du caoutchouc, muni en particulier de supports de résistance (2) noyés, la zone de jonction (6) comprenant une amorce (7) et une fin (8) et le dispositif, dans le but de détecter les écarts par rapport à la valeur de consigne étant formé au moins des composants suivants, précisément :
- au moins deux en particulier quatre marques de mesure (9, 10, 25, 26, 27, 28), disposées de manière que chaque fois au moins une marque de mesure en particulier deux marques de mesure s'approuvent dans la zone de l'amorce de jonction (7) ou de la fin de jonction (8) et soient produites par usinage mécanique, de façon durable dans la zone de bordure de la face de défilement (3) ou la face support (4) de la bande transporteuse ou bien à l'intérieur de la zone de bordure (5) s'étendant entre la face de défilement et la face support, les marques de mesure étant résistantes face aux sollicitations élevées à la température et à la pression ainsi que face à l'humidité et à d'autres sollicitations mécaniques et chimiques ;
- un système de détection de marques de mesure (I, III) adapté au type de marques de mesure, afin de mesurer la vitesse ainsi qu'également la longueur de la jonction, le système de détection de marque de mesure étant disposé à gauche et/ou à droite en observant dans la direction de déplacement de la bande transporteuse ;
- un traitement de signal (17, 18) pour le système de détection de marque de mesure, sur la base d'une mesure du temps, les signaux fournis par les détecteurs de marque de mesure (11, 12, 13 ; A, B, C, D) étant traités et adaptés de manière que le début et la fin de la mesure de temps puisse être déclenchée de façon fiable et précise.
- un système d'identification (II, III) indépendant du sens de défilement de la bande transporteuse, comprenant
- une adresse (14, 22, 29, 30) dans le but d'identifier le site de mesure, se trouvant à l'extérieur de la zone de jonction (6) à proximité de l'amorce de jonction (7) et/ou de la fin de jonction (8), l'adresse étant disposée à gauche et/ou à droite en observant dans la direction de déplacement de la bande transporteuse et précisément à l'intérieur de la zone de bordure de la face de défilement (3) ou de la face support (4) de la bande transporteuse ou bien à l'intérieur de la zone de bordure (5) s'étendant entre la face de défilement et la face support ;
- un détecteur d'adresse (15, 23 ; C, D) adapté au type d'adresse, qui est disposé à gauche et/ou à droite en observant également dans la direction de déplacement de la bande transporteuse ; ainsi que
- un appareil de lecture (16, 24) pour l'adresse, relié à son tour au détecteur d'adresse ;
- un élément de mesure de temps (19), relié au traitement de signal pour le système de détection de marque de mesure ;
- un système de mesure (IV) pour déterminer la température de la bande et la température ambiante ;
- un système de mesure (V) supplémentaire pour déterminer la force de traction exercée sur la bande ; et
- un calculateur de processus (20) dans le but d'évaluer toutes les données, le calculateur de processus (21) étant à son tour relié à une commande d'entraînement.

2. Dispositif selon la revendication 1, pour lequel les marques de mesure (9, 10) se trouvent directement à l'intérieur de l'amorce de jonction (7) ou de la fin de jonction (8).

3. Dispositif selon la revendication 1, dans lequel les marques de mesure (25, 26, 27, 28) se trouvent à l'extérieur de la zone de liaison (6) et précisément en limite de l'amorce de jonction (7) ou de la fin de jonction (8).

4. Dispositif selon l'une des revendications 1 à 3, pour lequel les marques de mesure (9, 10, 25, 26, 27, 28) sont formées d'un matériau présentant des propriétés électriques et/ou magnétiques, en particulier sous la forme de petites bandes métalliques ou d'aimants permanents, les aimants permanents se présentant de préférence sous la forme d'un agencement en rangée.

5. Dispositif selon l'une des revendications 1 à 3, dans lequel les marques de mesure sont des marquages optiques ou bien des entailles ou des bossages appliqués ou réalisés de façon mécanique.

6. Dispositif selon l'une des revendications 1 à 5, dans lequel l'adresse (14, 22, 29, 30), à l'amorce de jonction (7) ou à la fin de jonction (8) présente un espacement (V) inférieur à la longueur de jonction (L), en particulier inférieur à 1/4 de la longueur de jonction.

7. Dispositif selon l'une des revendications 1 à 6, pour lequel l'adresse (14, 29, 30) du système d'identification est un code, en particulier sous le point de vue d'une détection mécanique, optique, magnétique à conductivité électrique ou radioactive.

8. Dispositif selon la revendication 7, le code (14) étant un code à barres ou bien structuré d'une façon analogue à un code à barres.

9. Dispositif selon la revendication 7, le code (29, 30) étant formé de petits aimants permanents et précisément sous la forme d'un agencement en rangée.

10. Dispositif selon l'une des revendications 1 à 6, pour lequel l'adresse (22) du système d'identification est un transpondeur, le détecteur d'adresse est une antenne (23) comportant un appareil émetteur et récepteur afférent.

11. Dispositif selon l'une des revendications 1 à 10, dans lequel l'adresse (14, 22) du système d'identification (II) en référence aux marques de mesure est une partie séparée.

12. Dispositif selon l'une des revendications 1 à 10, en particulier en liaison avec la revendication 9, l'adresse (29, 30) du système d'identification (III) et les marques de mesure (25, 26, 27, 28) formant un composant unique.

13. Dispositif selon l'une des revendications 1 à 12, pour lequel les marques de mesure (9, 10, 25, 26, 27, 28) et/ou l'adresse (14, 22, 29, 30) sont creusées dans du caoutchouc ou dans un matériau synthétique analogue à du caoutchouc.

14. Dispositif selon l'une des revendications 1 à 13, pour lequel les marques de mesure (9,10) ainsi qu'également l'adresse (14, 22) sont creusées à l'intérieur de la zone de bordure (5) s'étendant entre la face de défilement (3) et la face support (4) de la bande transporteuse.

15. Dispositif selon l'une des revendications 1 à 13, pour lequel les marque de mesure (25, 26, 27, 28) ainsi qu'également l'adresse (29, 30) sont creusées dans la zone de bordure de la face support (4) de la bande transporteuse.

16. Dispositif selon l'une des revendications 1 à 15, dans lequel concernant le système de détection de marques de mesure (I, III) sont utilisés des capteurs travaillant sur la base d'un procédé radar/micro-onde, inductif, sur la base de méthodes optiques ou optoélectriques, incluant des senseurs laser, des systèmes magnéto-sensibles, en particulier des capteurs à effet Hall ou des capteurs magnéto-résistifs, ainsi qu'un rayonnement ionisant.

17. Dispositif selon l'une des revendications 1 à 16, dans lequel le système de détection de marques de mesure (I, III) est formé d'au moins deux détecteurs disposés à une distance (u) l'un de l'autre en observant dans la direction de déplacement de la bande transporteuse, la distance (u) étant la distance de mesure pour effectuer la mesure de la vitesse.

18. Dispositif selon la revendication 17, en liaison avec la revendication 14, dans lequel les détecteurs (11, 12, 13) sont disposés à hauteur de la zone de bordure (5) s'étendant entre la face de défilement (3) et la face support (4) de la bande transporteuse.

19. Dispositif selon la revendication 18, l'espacement (u) entre deux détecteurs (11, 12) disposés dans la direction de déplacement de la bande transporteuse étant inférieur à la longueur de jonction (L), en particulier cependant d'une valeur sensiblement égale à la longueur de jonction.

20. Dispositif selon la revendication 18 ou 19, dans lequel au moins l'un des deux détecteurs (11,12), disposés à une distance (u) l'un de l'autre en observant dans la direction de déplacement de la bande transporteuse, assure en même temps la mesure de la longueur de jonction.

21. Dispositif selon la revendication 18 ou 19, dans lequel la mesure de la longueur de jonction s'effectue en utilisant un détecteur (13) supplémentaire.

22. Dispositif selon la revendication 17 en liaison avec la revendication 15, en particulier de nouveau en liaison avec les revendications 9 et 12, dans lequel le système de détection de marque de mesure (III) est formé d'au moins deux têtes de capteurs (A, B, C, D), en particulier, de quatre têtes de capteurs, disposées au-dessus de la face support (4) de la bande transporteuse et logées alors de préférence dans un boîtier métallique, sachant qu'au moyen des têtes de détecteur est en même temps effectuée la mesure de la longueur de jonction.

23. Dispositif selon la revendication 22, où l'espacement (u) entre deux têtes de détecteur disposées dans la direction de déplacement de la bande transporteuse, en particulier les têtes détecteurs (A, C), correspond à peu près à la longueur de jonction (L).

24. Dispositif selon l'une des revendications 1 à 23, en particulier avec l'une des revendications 18 à 21, dans lequel le système de détection de marques de mesure (1) et le système d'identification (2) sont des composants travaillant séparément.

25. Dispositif selon l'une des revendications 1 à 23, en particulier en liaison avec les revendications 22 ou 23, dans lequel le système de détection de marques de mesure et le système d'identification forment un système global (III) intégré.

26. Dispositif selon l'une des revendications 1 à 25, dans lequel le système de mesure (IV) de détection de la température de bande repose sur la technique de mesure par infrarouge.

27. Dispositif selon l'une des revendications 1 à 26, dans lequel le système de mesure (IV) de détermination de la température ambiante repose sur un élément de mesure, par exemple un thermo-élément ou un thermomètre à résistance.

28. Dispositif selon l'une des revendications 1 à 27, dans lequel le système de mesure (V) de détermination de la force de traction exercée sur la bande repose sur un palier instrumenté pour la mesure, un système hydraulique ou bien un moyeu de mesure de couple.

29. Dispositif selon l'une des revendications 1 à 28, en particulier en liaison avec la revendication 28, dans lequel le système de mesure pour la détermination de la force de traction exercée sur la courroie est disposé dans le tambour d'entraînement (32) ou bien dans le tambour de renvoi auquel la force de traction est maximale.

30. Dispositif selon l'une des revendications 26 à 29, dans lequel le système de mesure (IV, V) respectif est disposé à gauche et/ou à droite en observant dans la direction de déplacement de la bande transporteuse.

31. Dispositif selon l'une des revendications 1 à 30, en particulier en liaison avec l'une des revendications 26 à 30, dans lequel, le résultat de mesure dans le cadre de la détermination de la température de bande et de la température ambiante, ainsi qu'également de la détermination de la force de traction exercée sur la bande, est amené directement au calculateur de processus (20) sous la forme d'un signal numérique issu d'un traitement de signal (33).
